# FASCICULE DE BREVET EUROPEEN

(11) **EP 4 583 810 B1**
(45) Date de publication et mention de la délivrance du brevet: **06.05.2026**
(21) Numéro de dépôt: 23748759.0
(22) Date de dépôt: 26.07.2023
(51) Int. Cl.: A61C 5/42

(54) **INSTRUMENT ENDODONTIQUE COMPRENANT UNE PORTION D'ASSEMBLAGE AMÉLIORÉE**
ENDODONTISCHES INSTRUMENT MIT EINEM VERBESSERTEN ZUSAMMENBAUTEIL
ENDODONTIC INSTRUMENT COMPRISING AN IMPROVED ASSEMBLY PORTION

(30) Priorité: 08.09.2022 FR 2208998
(43) Date de publication de la demande: 16.07.2025
(73) Titulaire: Neolix, 53600 Châtres-la-Forêt (FR)
(72) Inventeur: PERNOT, Jacques, 25870 VIEILLEY (FR); PAUL, Emilien, 53600 MEZANGERS (FR)
(74) Mandataire: Boüan du Chef du Bos, Louis-Paterne
(86) Numéro de dépôt international: PCT/EP2023/070704
(87) Numéro de publication internationale: WO 2024/052005

(56) Documents cités:
- WO-A1-2006/130989
- US-A1- 2006 110 703
- US-A1- 2011 171 595

## Description

### Domaine de l'invention

La présente invention concerne les instruments endodontiques.

En particulier, l'invention concerne la portion d'assemblage de tels instruments endodontiques, permettant à instrument endodontique d'être maintenu, et le plus souvent entraîné en rotation, par un équipement porte-instrument.

### Art antérieur

Parmi ces instruments dentaires, les instruments endodontiques sont spécifiquement conçus pour être introduits dans le canal radiculaire des dents, pour y effectuer des soins endodontiques. Du fait de cette utilisation spécifique, les instruments endodontiques sont soumis à des contraintes d'utilisation très différentes des autres instruments dentaires rotatifs, tels que les fraises. Ainsi, à la différence des fraises, des instruments endodontiques tournent à une vitesse relativement lente, mais doivent transmettre un couple relativement important et contrôlé avec précision. Ces instruments endodontiques sont généralement maintenus par les équipements porte-instrument spécifiques, qui permettent généralement leur entraînement en rotation autour de leur axe.

WO 2006/130989 Al présente un exemple d'instrument endodontique.

Pour permettre le maintien et l'entraînement en rotation efficace de ces instruments endodontiques par les équipements porte-instrument, les instruments sont généralement équipés d'un manche spécifique dit de « Type 1 » normalisé par la norme ISO-1797.

Ce manche normalisé présente la forme générale cylindrique d'un diamètre de 2,35 mm, bien supérieur au diamètre des barres métalliques dans lesquelles sont usinées les lames des instruments endodontiques, qui est généralement compris entre 0,8 mm et 1,2 mm. Le centrage, dans un équipement porte-instrument, de l'instrument endodontique équipé d'un tel manche est généralement assuré par la coopération de la forme cylindrique du manche avec une forme complémentaire dans l'équipement porte-instrument. Ce manche normalisé comprend par ailleurs plusieurs usinages. Ainsi, il présente une gorge périphérique, dans laquelle peut être introduit un élément de verrouillage de l'équipement porte-instrument, permet d'assurer le verrouillage se l'instrument endodontique dans l'équipement porte-instrument dans la direction axiale. Par ailleurs, le manche présente également un méplat qui, coopérant avec une forme complémentaire d'un élément tournant de l'équipement porte-instrument, permet d'entraîner l'instrument endodontique en rotation.

Le centrage de l'instrument endodontique, son verrouillage dans la direction axiale et son entraînement en rotation sont donc chacun assuré par une zone spécifique du manche.

De tels manches donnent globalement satisfaction pour l'entraînement des instruments endodontiques. Ils présentent cependant une taille importante, comparativement à la taille des instruments endodontiques, qui nécessite une tête de porte-instrument qui est elle-même de taille importante. Le volume d'une telle tête de porte-instrument peut constituer un inconvénient, dans la mesure où cette tête peut gêner la vision du dentiste opérant un patient et créer un encombrement gênant dans la bouche du patient.

Il est à noter par ailleurs que l'insertion d'un tel manche normalisé dans un équipement porte-instrument ne peut être faite que dans une position angulaire unique, correspondant à l'alignement du méplat avec la forme complémentaire du porte-instrument. La personne réalisant cette insertion doit donc tâtonner, en tournant l'instrument, jusqu'à trouver cette position angulaire permettant le verrouillage de l'instrument dans l'équipement porte-instrument.

Par ailleurs, la fabrication de tels manches normalisés, ainsi que leur assemblage au manche, sont des opérations couteuses qui augmentent de façon sensible le coût de production des instruments endodontiques. Il est à noter à cet égard que de tels manches normalisés présentent un logement pour recevoir la queue de la lame de l'instrument endodontique, qui doit présenter le même diamètre que cette queue. Il est donc nécessaire, pour fabriquer une pluralité d'instruments endodontiques à partir de lames de plusieurs diamètres, de disposer d'une référence spécifique de manche par diamètre de lames.

Il a été proposé, notamment dans le document FR 2 972 918 A, de réaliser des instruments endodontiques présentant un manche différent, de dimensions plus réduites, et un équipement porte-instrument spécifiquement adapté à un tel manche. Une telle solution présente cependant des inconvénients. Ainsi, il est difficile de réaliser l'usinage, dans ce manche de petite taille, des formes permettant d'assurer, d'une part, le centrage et l'entraînement en rotation du manche et, d'autre part, le verrouillage de la position de l'instrument dans une direction axiale.

Par ailleurs, le porte-instrument spécifique, qui doit comprendre, d'une part, un moyen de centrage et d'entraînement en rotation de l'instrument et, d'autre part, un moyen de verrouillage de cet instrument dans une direction axiale, est également complexe et difficile à réaliser, du fait des dimensions réduites du manche.

### Exposé de l'invention

La présente invention a pour objectif de pallier ces inconvénients de l'art antérieur.

En particulier, l'invention a notamment pour objectif de proposer un instrument endodontique comprenant une portion d'assemblage de dimensions plus réduites que les manches normalisés utilisés de façon habituelle.

Un autre objectif de l'invention est de proposer un tel instrument endodontique dont la fabrication est peu complexe et peu couteuse.

Encore un autre objectif de l'invention est de proposer un tel instrument endodontique qui puisse être maintenu par un équipement porte-instrument dont la complexité est limitée.

Ces objectifs, ainsi que d'autres qui apparaîtront plus clairement par la suite, sont atteints à l'aide d'un instrument endodontique s'étendant le long d'un axe longitudinal entre une première extrémité d'assemblage et une seconde extrémité libre, cet instrument endodontique présentant une portion active qui s'étend à partir de son extrémité libre, et une portion d'assemblage, qui s'étend à partir de son extrémité d'assemblage, dans lequel la portion d'assemblage présente un segment de verrouillage, au niveau duquel trois méplats sont formés sur l'instrument, chacun de ces trois méplats épousant respectivement, dans chacune des sections transversales du segment de verrouillage, l'un des côtés d'un triangle équilatéral centré sur l'axe longitudinal, au moins un de ces méplats étant borné, à son extrémité la plus proche de l'extrémité d'assemblage de l'instrument, par un épaulement orienté sensiblement vers l'extrémité libre de l'instrument endodontique.

Une telle forme de la portion d'assemblage de l'instrument endodontique permet d'assurer efficacement le centrage, le maintien et l'entrainement en rotation de l'instrument endodontique, même quand cette portion d'assemblage présente des dimensions faibles, inférieures à celles des manches normalisés souvent utilisés pour les instruments endodontiques.

Il est particulièrement avantageux, sur une telle portion d'assemblage, que les fonctions de centrage, de transmission de la rotation et de blocage de la translation selon l'axe longitudinal, au moins dans la direction correspondant au retrait de l'instrument, soient assurées par les mêmes méplats. Une telle configuration simplifie la fabrication de la portion d'assemblage. Elle permet par ailleurs de diminuer les dimensions de cette portion d'assemblage, et notamment sa longueur, ce qui est particulièrement avantageux pour diminuer l'encombrement des dispositifs endodontiques dans la bouche des patients.

Par ailleurs, un tel instrument peut indifféremment être verrouillé dans un porte-instrument dans trois positions angulaires. Son insertion dans le porte-instrument est donc plus facile que l'insertion des instruments endodontiques présentant un manche standardisé de l'art antérieur, qui ne peut être verrouillé que dans une position angulaire unique.

Enfin, il a été vérifié par les inventeurs que des méplats compatibles avec un même équipement porte-instrument, pouvaient être mis en œuvre efficacement sur une gamme de différents instruments endodontiques, présentant des diamètres différents.

Avantageusement, l'instrument endodontique est formé par l'usinage d'une tige cylindrique dont l'axe de symétrie constitue l'axe longitudinal de l'instrument.

Un tel instrument endodontique, qui ne nécessite pas l'assemblage d'un manche rapporté sur la lame, mais est formé intégralement par la même tige cylindrique usinée, peut être fabriqué plus facilement que les instruments endodontiques habituellement utilisés.

Selon un mode de réalisation particulier, chacun des méplats est borné, à son extrémité la plus proche de l'extrémité libre de l'instrument, par un épaulement orienté sensiblement vers l'extrémité d'assemblage de l'instrument.

Dans ce mode de réalisation, les méplats peuvent assurer le blocage en translation de l'instrument, dans la direction de son extrémité d'assemblage. Dans d'autres cas, il est également possible que ce blocage soit assuré par le contact de cette extrémité d'assemblage avec un élément de l'équipement porte-instrument.

De préférence, chacun des méplats forme une surface plane. De préférence, la surface de chacun des méplats est sensiblement parallèle à l'axe longitudinal

De tels usinages sont très faciles à réaliser. Cependant, d'autres formes de méplats peuvent apporter les mêmes caractéristiques de maintien de l'instrument, à condition que l'équipement porte-instrument soit adapté.

Selon un mode de réalisation particulièrement avantageux, chacun des méplats est situé à une distance de l'axe longitudinal comprise entre 0,25 mm et 0,35 mm, et l'instrument endodontique est formé par l'usinage d'une tige cylindrique dont le diamètre est compris entre 0,8 mm et 1,2 mm.

Il est ainsi possible de fournir une gamme d'instruments endodontiques, couvrant tous les besoins habituels en endodontie, qui présentent des méplats identiques et peuvent donc être maintenus efficacement par un même équipement porte-instrument.

Selon un mode de réalisation avantageux, la portion d'assemblage présente un segment d'extrémité, entre l'extrémité d'assemblage et le segment de verrouillage, le segment d'extrémité présentant trois méplats, respectivement parallèles aux trois méplats du segment de verrouillage, et situés à une plus grande distance de l'axe longitudinal que les méplats du segment de verrouillage.

Une telle forme de segment d'extrémité peut faciliter l'introduction de la portion d'assemblage dans un équipement porte-instrument, notamment quand les dimensions de la tige dans laquelle est usiné l'instrument sont importantes.

### Description des figures

L'invention sera mieux comprise à la lecture de la description suivante de modes de réalisation préférentiels, donnée à titre de simple exemple figuratif et non limitatif, et accompagnée des figures parmi lesquelles :
- La [Fig.1] est une représentation schématique, vue de côté, d'un instrument endodontique 1 selon un mode de réalisation de l'invention.
- La [Fig.2] est une vue de coupe transversale de l'instrument endodontique de la [Fig.1].
- La [Fig.3] est une représentation schématique, en perspective, d'un instrument endodontique 2 selon un autre mode de réalisation de l'invention.
- La [Fig.4] est une vue de coupe transversale de l'instrument endodontique de la [Fig.3].
- La [Fig.5] est une représentation schématique, en perspective, d'un instrument endodontique 3 selon un autre mode de réalisation de l'invention.
- La [Fig.6] est une vue de coupe transversale de l'instrument endodontique de la [Fig.5].

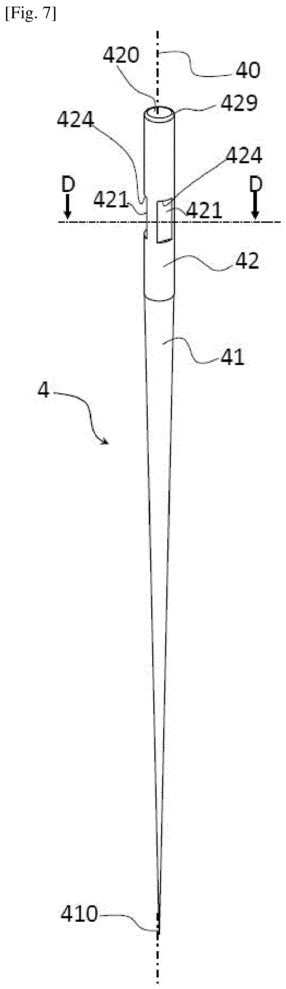

- La [Fig.7] est une représentation schématique, en perspective, d'un instrument endodontique 4 selon un autre mode de réalisation de l'invention.
- La [Fig.8] est une vue de coupe transversale de l'instrument endodontique de la [Fig.7].

### Description détaillée de l'invention

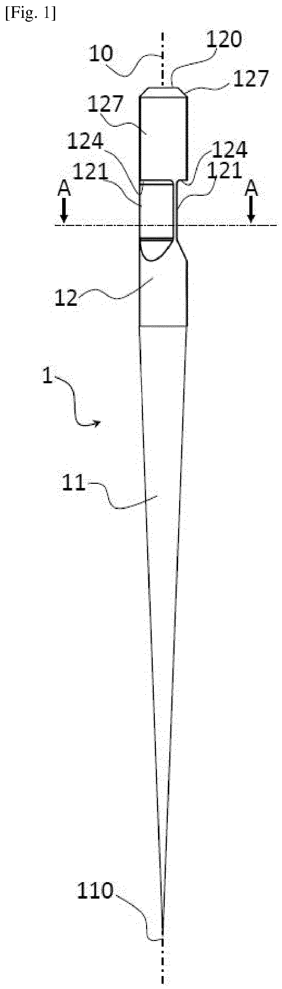

La [Fig.1] est une représentation schématique, en vue de côté, d'un instrument endodontique 1 selon un mode de réalisation de l'invention. Cet instrument endodontique 1 est fabriqué par usinage d'une barre métallique cylindrique, dont l'axe de symétrie constitue l'axe longitudinal 10 de l'instrument endodontique 1. Dans la suite de la description, le terme « plan transversal » désigne un plan perpendiculaire à cet axe longitudinal.

L'instrument endodontique 1 s'étend le long de cet axe longitudinal 10 entre ses deux extrémités, constituées respectivement par une extrémité libre, ou pointe 110 et une extrémité d'assemblage 120. Entre ces deux extrémités, l'instrument endodontique 1 se compose de plusieurs portions, formant chacune un segment de l'instrument.

Ainsi, une portion active 11 s'étendant à partir de la pointe 110 de l'instrument, occupe une part importante de la longueur de l'instrument endodontique 1. Cette portion active 11, qui est généralement usinée de façon à présenter des surfaces tranchantes ou abrasives, est destinée à être introduite dans le canal radiculaire d'une dent pour y effectuer un traitement. Sur la [Fig.1], comme sur les autres figures de la présente demande, elle est représentée schématiquement par une portion conique.

L'instrument endodontique 1 présente également une portion d'assemblage 12, qui est destinée à être introduite dans un équipement porte-instrument pour assurer le maintien de l'instrument endodontique 1 par l'équipement porte-instrument.

La portion active 11 et la portion d'assemblage 12 peuvent constituer, ensemble, l'intégralité de la longueur de l'instrument endodontique 1. Il est également possible, dans certains modes de réalisation, qu'une portion intermédiaire de l'instrument endodontique 1 soit prévue entre la portion active 11 et la portion d'assemblage 12.

Dans le mode de réalisation représenté, la portion d'assemblage 12 est en grande partie formée par la surface cylindrique de la barre métallique cylindrique ayant servi à fabriquer l'instrument endodontique 1. Certaines parties de la surface de la portion d'assemblage 12 sont cependant formées par l'usinage de cette barre métallique cylindrique.

Ainsi, le segment de la portion d'assemblage 12 qui jouxte immédiatement l'extrémité d'assemblage 120 présente un chanfrein 129, qui permet avantageusement de faciliter l'introduction de la portion d'assemblage 12 dans une tête de porte-instrument. Dans le mode de réalisation représenté par la [Fig.1], ce chanfrein présente une forme conique, qui peut par exemple être réalisée par tournage.

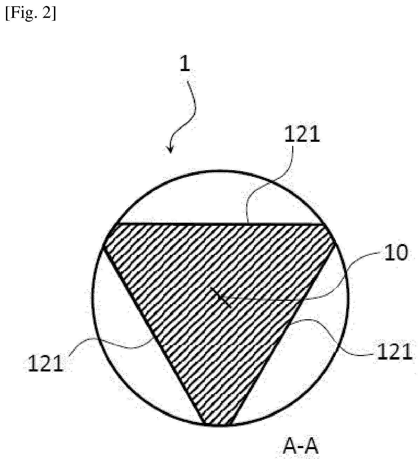

Par ailleurs, trois méplats 121 sont usinés dans la portion d'assemblage 12 de l'instrument endodontique 1. On entend par « méplat », au sens de la présente invention, une surface apparaissant comme rectiligne dans un plan transversal à l'axe longitudinal 10 de l'instrument endodontique 1. Ces trois méplats 121 sont bien visibles sur la [Fig.2], qui est une vue de coupe transversale de l'instrument endodontique 1 au niveau de ces méplats 121.

Ces trois méplats 121 sont placés sur le même tronçon de la portion d'assemblage 12, appelé par la suite segment de verrouillage. Comme le montre la [Fig.2], ils sont placés de telle façon que, dans un plan transversal à l'axe longitudinal 10, les trois méplats 121 épousent respectivement la forme des trois côtés d'un triangle équilatéral centré sur l'axe longitudinal 10.

Les méplats 121 sont avantageusement plus proches de l'axe longitudinal 10 de l'instrument endodontique 1 que les surfaces du segment d'extrémité 127 de la portion d'assemblage 12 qui est située entre les méplats et l'extrémité d'assemblage 120, de telle façon que des épaulements 124 apparaissent à la jonction entre les méplats 121 et le segment d'extrémité 127. Les extrémités de ces méplats 121 qui sont les plus proches de l'extrémité d'assemblage de l'instrument, sont donc délimitées par ces épaulements orientés vers la pointe 110. Ainsi, les trois épaulements 124, délimitant respectivement les extrémités des méplats 121, sont avantageusement situés à égale distance de l'extrémité d'assemblage 120 de l'instrument endodontique 1 et sont donc situés sensiblement dans le même plan transversal de cet instrument endodontique 1.

Ces épaulements peuvent être des surfaces planes situées dans un plan transversal, dont les normales, parallèles à l'axe longitudinal, sont orientées dans la direction de la pointe de l'instrument endodontique. Ils peuvent également présenter des formes ou des orientation différentes, capables d'offrir un appui permettant de bloquer un déplacement de l'instrument endodontique 1 selon son axe longitudinal 10. Ils peuvent par exemple, sans sortir du cadre de l'invention, être inclinés par rapport à un plan sensiblement transversal à l'axe longitudinal 30.

Ces trois méplats 121, ainsi que les épaulements 124, constituent les surfaces essentielles de la portion d'assemblage, qui sont destinées à être en contact avec les mâchoires complémentaires d'un équipement porte-instrument. Le contact entre ces méplats et les mâchoires complémentaires peut en effet assurer à la fois le centrage de l'axe longitudinal 10 de l'instrument endodontique 1 sur l'axe de rotation de l'équipement porte-instrument, l'entraînement en rotation de cet instrument endodontique 1, et le blocage en translation de l'instrument endodontique 1, le long de son axe longitudinal 10, en direction de sa pointe 110.

Le blocage en translation de l'instrument endodontique 1, le long de son axe longitudinal 10, en direction de son extrémité d'assemblage 120 peut être assuré, dans le mode de réalisation représenté, par le contact entre cette extrémité 120 et une surface complémentaire de l'équipement porte-instrument. Dans d'autres modes de réalisation, ce blocage peut également être assuré par le contact entre les mâchoires de l'équipement porte-instrument et des épaulements de l'instrument orientés vers l'extrémité d'assemblage 120. Par exemple, les méplats 121 peuvent présenter de tels épaulements à leur extrémité la plus proche de la pointe 110. Dans ce dernier cas, les méplats 121 de la portion d'assemblage 12 et les épaulements 124 qui délimitent ces méplats 121 assurent en totalité le maintien de l'instrument endodontique 1 par l'équipement porte-instrument.

Le maintien de l'instrument endodontique 1 par l'équipement porte-instrument étant assuré par la forme des méplats 121, et éventuellement par l'extrémité d'assemblage 120, la forme de la surface du reste de la portion d'assemblage 12 n'a pas de fonction particulière pour cet assemblage. Il est donc possible d'imaginer une pluralité de formes pour cette surface, autres que la forme représentée par la [Fig.1].

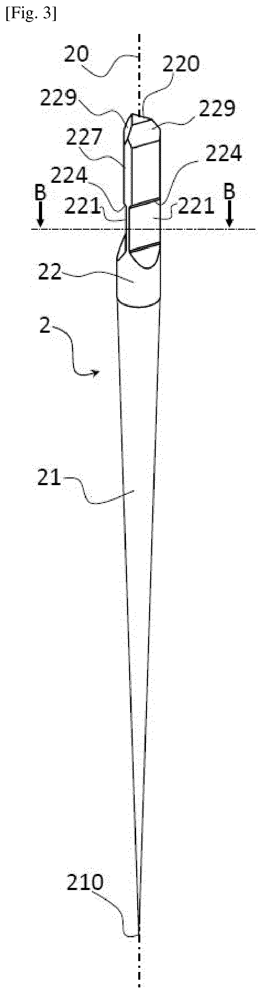

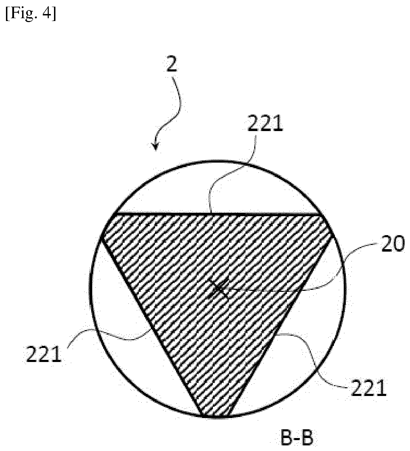

Ainsi, la [Fig.3] représente, en perspective, un instrument endodontique 2 selon une variante du mode de réalisation de la [Fig.1]. Cet instrument endodontique 2 s'étend le long d'un axe longitudinal 20, et comprend une portion active 21 s'étendant jusqu'à une extrémité libre, ou pointe 210 et une portion d'assemblage 22 s'étendant jusqu'à une extrémité d'assemblage 220. Sa portion d'assemblage 22 présente, au niveau d'un segment de verrouillage, trois méplats 221 dont les extrémités les plus proches de l'extrémité d'assemblage 220 de l'instrument, sont délimitées par des épaulements 224 orientés vers la pointe 210. Comme le montre la vue de coupe transversale de la [Fig.4] , les méplats 221 sont placés de façon à épouser respectivement la forme des trois côtés d'un triangle équilatéral centré sur l'axe longitudinal 20, dans un plan transversal à l'axe longitudinal 20.

Dans cette portion d'assemblage 22, le segment d'extrémité 227 de la portion d'assemblage 22 qui est situé entre l'extrémité d'assemblage 220 et les méplats 221 ne présente pas une forme cylindrique, mais présente une pluralité de méplats parallèles aux méplats 221. Ces méplats du segment d'extrémité 227 sont cependant moins profonds que les méplats 221 servant au maintien de l'instrument endodontique 2, de telle sorte que les épaulements 224 apparaissent bien à la limite entre ces méplats 221 et le segment d'extrémité 227. Les méplats formés à la surface du segment d'extrémité 227 de la portion d'assemblage 22 n'ont pas de fonction pour le maintien de la portion d'assemblage 22 par un équipement porte-instrument. Ils peuvent cependant, avantageusement, faciliter l'introduction de la portion d'assemblage 22 dans l'équipement porte-instrument, en limitant l'écartement nécessaire des mâchoires qui seront ensuite resserrées contre les méplats 221 pour maintenir la portion d'assemblage 22.

Par ailleurs, le segment de la portion d'assemblage 22 qui jouxte immédiatement l'extrémité d'assemblage 220 présente un chanfrein formé par trois plans inclinés 229, qui sont, dans ce mode de réalisation, réalisés par une découpe par électroérosion à fil.

La distance entre les méplats 121 servant au maintien de l'instrument endodontique et l'axe longitudinal de l'instrument endodontique n'est pas nécessairement dépendante du diamètre de l'instrument endodontique, ou de la barre utilisée pour former l'instrument. Il est ainsi possible, de façon avantageuse, de former des méplats identiques, présentant une même distance de l'axe longitudinal de l'instrument endodontique, sur des portions d'assemblage fabriquées à partir de barres cylindriques de diamètres différents. Les conformations identiques des méplats permettent aux instruments endodontiques obtenus d'être maintenus par les mâchoires d'un même équipement porte-instrument.

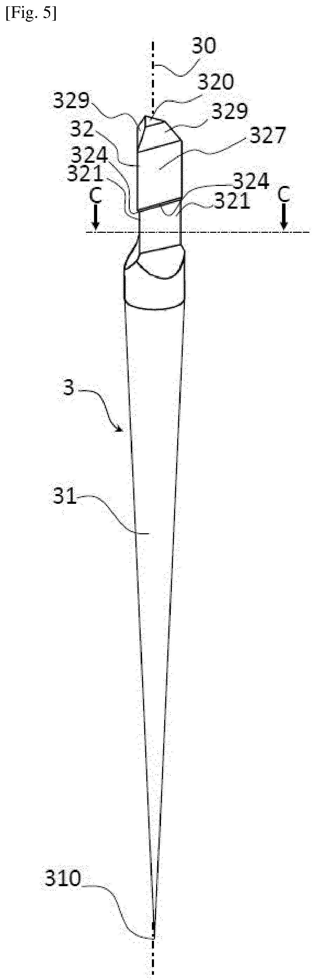

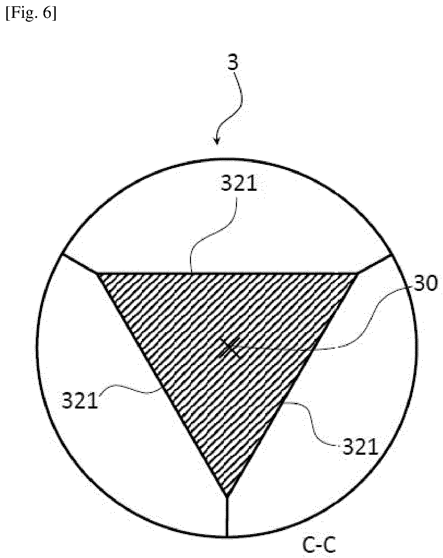

A titre d'exemple, la [Fig.5] représente, en perspective, un instrument endodontique 3 selon une variante des modes de réalisation des figures 1 et 3. Cet instrument endodontique 3 s'étend le long d'un axe longitudinal 30, et comprend une portion active 31 s'étendant jusqu'à une extrémité libre, ou pointe 310 et une portion d'assemblage 32 s'étendant jusqu'à une extrémité d'assemblage 320. Sa portion d'assemblage 32 présente, au niveau d'un segment de verrouillage, trois méplats 321, dont les extrémités les plus proches de l'extrémité d'assemblage 320 de l'instrument sont délimitées par des épaulements 324 orientés vers la pointe 310. Comme le montre la vue de coupe transversale de la [Fig.6], les méplats 321 sont placés de façon à épouser respectivement la forme des trois côtés d'un triangle équilatéral centré sur l'axe longitudinal 30, dans un plan transversal à l'axe longitudinal 30.

L'instrument endodontique 3 est formé à partir d'une barre cylindrique de diamètre plus important que la barre cylindrique ayant servi à former les instruments endodontiques 1 et 2. Pourtant, les méplats 321 sont avantageusement situés à la même distance de l'axe longitudinal 30 que les méplats 121 de l'axe longitudinal 10, et que les méplats 221 de l'axe longitudinal 20. Par ailleurs, le segment d'extrémité 327 de la portion d'assemblage 32 qui est situé entre l'extrémité d'assemblage 320 et les méplats 321 présente avantageusement une forme proche de la forme du segment d'extrémité 227 de l'instrument endodontique 2. De même, le segment de la portion d'assemblage 32 qui jouxte immédiatement l'extrémité d'assemblage 320 présente un chanfrein formé par trois plans inclinés 329, qui sont, dans ce mode de réalisation, réalisés par une découpe par électroérosion à fil.

La portion d'assemblage 32 de cet instrument endodontique 3 peut ainsi, avantageusement, être maintenue par le même équipement porte-instrument que les portions de maintien des instruments endodontiques 1 et 2.

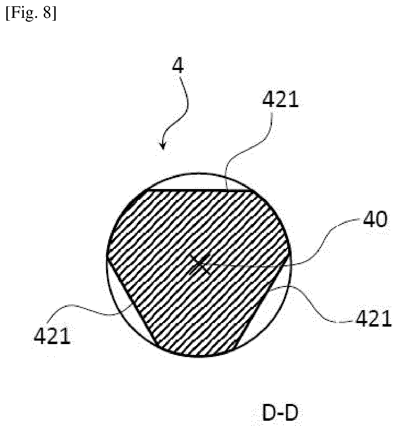

La [Fig.5] représente, en perspective, un instrument endodontique 4 selon une variante des modes de réalisation des figures 1, 3 et 5. Cet instrument endodontique 4 s'étend le long d'un axe longitudinal 40, et comprend une portion active 41 s'étendant jusqu'à une extrémité libre, ou pointe 410 et une portion d'assemblage 42 s'étendant jusqu'à une extrémité d'assemblage 420. Sa portion d'assemblage 42 présente, au niveau d'un segment de verrouillage, trois méplats 421 dont les extrémités les plus proches de l'extrémité d'assemblage 420 de l'instrument endodontique 4, sont délimités par des épaulements 424 orientés vers la pointe 410. Comme le montre la vue de coupe transversale de la [Fig.8], les méplats 421 sont placés de façon à épouser respectivement la forme des trois côtés d'un triangle équilatéral centré sur l'axe longitudinal 40, dans un plan transversal à l'axe longitudinal 40.

L'instrument endodontique 4 est formé à partir d'une barre cylindrique de diamètre plus faible que la barre cylindrique ayant servi à former les instruments endodontiques 1 et 2. Pourtant, les méplats 421 sont avantageusement situés à la même distance de l'axe longitudinal 40 que les méplats 121 de l'axe longitudinal 10, que les méplats 221 de l'axe longitudinal 20 et que les méplats 321 de l'axe longitudinal 30.

La portion d'assemblage 42 de cet instrument endodontique 4 peut ainsi, avantageusement, être maintenue par le même équipement porte-instrument que les portions de maintien des instruments endodontiques 1, 2 et 3. Le segment de cette portion d'assemblage 42 qui jouxte immédiatement l'extrémité d'assemblage 420 présente un chanfrein 429 qui, dans ce mode de réalisation, présente une forme conique.

Il est à noter que les méplats 421 occupent une proportion plus faible du périmètre de la portion d'assemblage 42 que les méplats formés dans des barres de diamètre plus élevé. Il a cependant été observé que ces méplats relativement peu profonds pouvaient être suffisants pour maintenir et entraîner en rotation des instruments endodontiques, avec le couple désiré.

Ainsi, des instruments endodontiques de diamètres différents, présentant des méplats selon l'invention, placés à la même distance de leur axe longitudinal, peuvent être maintenus par un même équipement porte-instrument. Les inventeurs ont ainsi testé des instruments endodontiques réalisés dans des barres de plusieurs diamètres, compris entre 0,8 mm et 1,2 mm, ce qui correspond aux diamètres habituellement utilisés en endodontie. Chacun de ces instruments endodontiques présente trois méplats, selon l'invention, qui sont situés à 0,3 mm de l'axe longitudinal de l'instrument. Chacun de ces instruments peut être maintenu par les mâchoires d'un même équipement porte-instrument, coopérant avec les méplats, et entrainé en rotation par cet équipement avec un couple suffisant pour réaliser des traitements endodontiques.

Les instruments endodontiques selon l'invention peuvent, avantageusement, être constitués uniquement par la lame obtenue par usinage de cette barre métallique cylindrique, sans qu'il soit nécessaire d'y ajouter d'autres pièces tels qu'un manche. La fabrication de l'instrument est donc facilitée.

De plus, la fabrication de la portion d'assemblage de ces instruments ne nécessite que l'usinage de méplats, qui sont relativement faciles à réaliser. Une telle fabrication est donc particulièrement peu complexe et peu couteuse.

Par ailleurs, les instruments endodontiques selon l'invention présentent un encombrement moins importants que les instruments endodontiques équipés de manches classiques. Ils peuvent donc être maintenus par des équipements porte-instruments moins encombrants dans la bouche du patient.

Enfin, les méplats permettant le maintien et l'entrainement en rotation des instruments endodontiques selon l'invention pouvant être formés dans des instruments de diamètre différents, il est possible de réaliser facilement une gamme d'instruments endodontiques de diamètres différents, pouvant être maintenus et entrainés par un même équipement porte instrument.

Les méplats formés dans la portion d'assemblage des instruments endodontiques selon l'invention forment chacun, au sens de la présente invention, une surface formant un segment rectiligne dans un plan transversal à l'axe longitudinal de l'instrument endodontique 1. Dans les modes de réalisation représentés, ces méplats forment des surfaces planes, parallèles à l'axe longitudinal.

Il est cependant possible, dans des variantes des solutions proposées, que les méplats présentent des formes différentes. Ainsi, à titre d'exemple, la distance entre des méplats plans et l'axe longitudinal peut varier. Les trois méplats peuvent dans ce cas épouser la surface d'une pyramide régulière à trois faces.

Il est également possible que la surface des méplats ne soit pas plane. Les surfaces des méplats peuvent par exemple être courbées ou présenter des ondulations, ou encore présenter une forme hélicoïdale centrée sur l'axe longitudinal, tant qu'elles épousent, dans un plan transversal, la forme d'un triangle équilatéral centré sur l'axe longitudinal.

La solution de méplats formant des surfaces planes parallèles à l'axe longitudinal est cependant préférée, dans la mesure où elle est efficace et facile à mettre en œuvre.

Dans les modes de réalisation représentés, les segments de verrouillage des portions d'assemblage comportent trois méplats épousant, dans un plan transversal, la forme d'un triangle équilatéral centré sur l'axe longitudinal de l'instrument endodontique. Ce choix de trois méplats, et seulement trois, est un choix préférentiel qui permet une grande facilité de réalisation, une bonne adaptation à des diamètres de barres variés, et le transfert efficace d'un couple important.

Une partie des avantages de l'invention peut cependant être obtenue avec un nombre différent de méplats.

Ainsi, une partie des avantages peut être obtenue avec un instrument endodontique formé par l'usinage d'une tige cylindrique dont l'axe de symétrie constitue l'axe longitudinal dudit instrument, ledit instrument endodontique s'étendant, le long dudit axe longitudinal, entre une première extrémité d'assemblage et une seconde extrémité libre, ledit instrument endodontique présentant une portion active qui s'étend à partir de son extrémité libre, et une portion d'assemblage, qui s'étend à partir de son extrémité d'assemblage, ladite portion d'assemblage présentant un segment de verrouillage, au niveau duquel quatre méplats sont formés sur l'instrument, chacun desdits quatre méplats épousant respectivement, dans chacune des sections transversales de ce segment de verrouillage, l'un des côtés d'un carré centré sur l'axe longitudinal de l'instrument, au moins un desdits méplats étant borné, à son extrémité la plus proche de l'extrémité d'assemblage de l'instrument, par un épaulement orienté sensiblement vers l'extrémité libre de l'instrument endodontique.

De la même façon, une partie des avantages peut être obtenue avec un instrument endodontique formé par l'usinage d'une tige cylindrique dont l'axe de symétrie constitue l'axe longitudinal dudit instrument, ledit instrument endodontique s'étendant, le long dudit axe longitudinal, entre une première extrémité d'assemblage et une seconde extrémité libre, ledit instrument endodontique présentant une portion active qui s'étend à partir de son extrémité libre, et une portion d'assemblage, qui s'étend à partir de son extrémité d'assemblage, ladite portion d'assemblage présentant un segment de verrouillage, au niveau duquel cinq méplats sont formés sur l'instrument, chacun desdits quatre méplats épousant respectivement, dans chacune des sections transversales de ce segment de verrouillage, l'un des côtés d'un pentagone régulier centré sur l'axe longitudinal de l'instrument, au moins un desdits méplats étant borné, à son extrémité la plus proche de l'extrémité d'assemblage de l'instrument, par un épaulement orienté sensiblement vers l'extrémité libre de l'instrument endodontique.

Enfin, une partie des avantages peut également être obtenue avec un instrument endodontique formé par l'usinage d'une tige cylindrique dont l'axe de symétrie constitue l'axe longitudinal dudit instrument, ledit instrument endodontique s'étendant, le long dudit axe longitudinal, entre une première extrémité d'assemblage et une seconde extrémité libre, ledit instrument endodontique présentant une portion active qui s'étend à partir de son extrémité libre, et une portion d'assemblage, qui s'étend à partir de son extrémité d'assemblage, ladite portion d'assemblage présentant un segment de verrouillage, au niveau duquel six méplats sont formés sur l'instrument, chacun desdits quatre méplats épousant respectivement, dans chacune des sections transversales de ce segment de verrouillage, l'un des côtés d'un hexagone régulier centré sur l'axe longitudinal de l'instrument, au moins un desdits méplats étant borné, à son extrémité la plus proche de l'extrémité d'assemblage de l'instrument, par un épaulement orienté sensiblement vers l'extrémité libre de l'instrument endodontique.

De telles variantes sont cependant plus difficiles à mettre en œuvre que la solution préférée à trois méplats, et peuvent s'avérer moins efficaces pour transmettre un couple.

Dans les modes de réalisation représentés, chacun des trois méplats du segment de verrouillage est borné, à son extrémité la plus proche de l'extrémité d'assemblage de l'instrument, par un méplat orienté sensiblement vers l'extrémité libre de l'instrument endodontique.

Il est cependant à noter qu'il n'est pas nécessaire que chacun de ces méplats présente un tel épaulement. En effet, un seul épaulement peut suffire pour permettre à une mâchoire d'un porte-instrument, de forme complémentaire à celle des méplats, de bloquer la translation de l'instrument le long de son axe longitudinal, dans la direction de sa pointe. Il est donc possible qu'un ou deux des méplats ne présentent pas d'e tel épaulement et, par exemple, se prolonge jusqu'à l'extrémité d'assemblage de l'instrument endodontique.

## Revendications

1. Instrument endodontique (1, 2, 3, 4) s'étendant le long d'un axe longitudinal (10, 20, 30, 40) entre une première extrémité d'assemblage (120, 220, 320, 420) et une seconde extrémité libre (110, 210, 310, 410), ledit instrument endodontique présentant une portion active (11, 21, 31, 41) qui s'étend à partir de son extrémité libre, et une portion d'assemblage (12, 22, 32, 42), qui s'étend à partir de son extrémité d'assemblage,
**caractérisé en ce que** ladite portion d'assemblage (12, 22, 32, 42) présente un segment de verrouillage, au niveau duquel trois méplats (121, 221, 321, 421) sont formés sur l'instrument,
chacun desdits trois méplats (121, 221, 321, 421) épousant respectivement, dans chacune des sections transversales dudit segment de verrouillage, l'un des côtés d'un triangle équilatéral centré sur ledit axe longitudinal,
au moins un desdits méplats (121, 221, 321, 421) étant borné, à son extrémité la plus proche de ladite extrémité d'assemblage de l'instrument, par un épaulement (124, 224, 324, 424) orienté sensiblement vers ladite extrémité libre (110, 210, 310, 410) dudit instrument endodontique.

2. Instrument endodontique selon la revendication précédente, **caractérisé en ce qu'**il est formé par l'usinage d'une tige cylindrique dont l'axe de symétrie constitue ledit axe longitudinal (10, 20, 30, 40).

3. Instrument endodontique selon l'une quelconque des revendications précédentes, **caractérisé en ce que** chacun desdits méplats (121, 221, 321, 421) est borné, à son extrémité la plus proche de l'extrémité libre (110, 210, 310, 410) de l'instrument, par un épaulement orienté sensiblement vers l'extrémité d'assemblage (120, 220, 320, 420) de l'instrument.

4. Instrument endodontique selon l'une quelconque des revendications précédentes, **caractérisé en ce que** chacun desdits méplats (121, 221, 321, 421) forme une surface plane.

5. Instrument endodontique selon la revendication précédente, **caractérisé en ce que** la surface de chacun desdits méplats (121, 221, 321, 421) est sensiblement parallèle audit axe longitudinal (10, 20, 30, 40).

6. Instrument endodontique selon la revendication précédente, **caractérisé en ce que** chacun desdits méplats (121, 221, 321, 421) est situé à une distance dudit axe longitudinal (10, 20, 30, 40) comprise entre 0,25 mm et 0,35 mm, et **en ce que** ledit instrument endodontique est formé par l'usinage d'une tige cylindrique dont le diamètre est compris entre 0,8 mm et 1,2 mm.

7. Instrument endodontique selon l'une quelconque des revendications 5 et 6, **caractérisé en ce que** ladite portion d'assemblage (22, 32) présente un segment d'extrémité (227, 327), entre ladite extrémité d'assemblage (220, 320) et ledit segment de verrouillage, ledit segment d'extrémité (227, 327) présentant trois méplats, respectivement parallèles aux trois méplats (221, 321) dudit segment de verrouillage, et situés à une plus grande distance dudit axe longitudinal (20, 30) que lesdits méplats (221, 321) dudit segment de verrouillage.

## Patentansprüche

1. Endodontisches Instrument (1, 2, 3, 4), das sich entlang einer Längsachse (10, 20, 30, 40) zwischen einem ersten Montageende (120, 220, 320, 420) und einem zweiten freien Ende (110, 210, 310, 410) erstreckt, wobei das endodontische Instrument einen aktiven Abschnitt (11, 21, 31, 41), der sich von seinem freien Ende aus erstreckt, und einen Montageabschnitt (12, 22, 32, 42) aufweist, der sich von seinem Montageende aus erstreckt,
**dadurch gekennzeichnet, dass** der Montageabschnitt (12, 22, 32, 42) ein Verriegelungssegment aufweist, auf dessen Höhe drei Abflachungen (121, 221, 321, 421) an dem Instrument ausgebildet sind,
wobei sich jede der drei Abflachungen (121, 221, 321, 421) jeweils in jedem der Querschnitte des Verriegelungssegments an eine der Seiten eines gleichseitigen Dreiecks anschmiegt, das auf der Längsachse zentriert ist,
mindestens eine der Abflachungen (121, 221, 321, 421) an ihrem Ende, das dem Montageende des Instruments am nächsten liegt, durch eine Schulter (124, 224, 324, 424) begrenzt ist, die im Wesentlichen zu dem freien Ende (110, 210, 310, 410) des endodontischen Instruments hin orientiert ist.

2. Endodontisches Instrument nach dem vorstehenden Anspruch,
**dadurch gekennzeichnet, dass** es durch die Bearbeitung einer zylindrischen Stange ausgebildet ist, deren Symmetrieachse die Längsachse (10, 20, 30, 40) bildet.

3. Endodontisches Instrument nach einem der vorstehenden Ansprüche, **dadurch gekennzeichnet, dass** jede der Abflachungen (121, 221, 321, 421) an ihrem Ende, das dem freien Ende (110, 210, 310, 410) des Instruments am nächsten liegt, durch eine Schulter begrenzt ist, die im Wesentlichen zu dem Montageende (120, 220, 320, 420) des Instruments hin orientiert ist.

4. Endodontisches Instrument nach einem der vorstehenden Ansprüche, **dadurch gekennzeichnet, dass** jede der Abflachungen (121, 221, 321, 421) eine ebene Fläche ausbildet.

5. Endodontisches Instrument nach dem vorstehenden Anspruch, **dadurch gekennzeichnet, dass** die Oberfläche jeder der Abflachungen (121, 221, 321, 421) im Wesentlichen parallel zu der Längsachse (10, 20, 30, 40) ist.

6. Endodontisches Instrument nach dem vorstehenden Anspruch, **dadurch gekennzeichnet, dass** jede der Abflachungen (121, 221, 321, 421) in einem Abstand von der Längsachse (10, 20, 30, 40) zwischen 0,25 mm und 0,35 mm gelegen ist, **und dadurch, dass** das endodontische Instrument durch die Bearbeitung einer zylindrischen Stange ausgebildet wird, dessen Durchmesser zwischen 0,8 mm und 1,2 mm liegt.

7. Endodontisches Instrument nach einem der Ansprüche 5 und 6,
**dadurch gekennzeichnet, dass** der Montageabschnitt (22, 32) ein Endsegment (227, 327) zwischen dem Montageende (220, 320) und dem Verriegelungssegment aufweist, wobei das Endsegment (227, 327) drei Abflachungen aufweist, die jeweils parallel zu den drei Abflachungen (221, 321) des Verriegelungssegments sind und in einem größeren Abstand von der Längsachse (20, 30) als die Abflachungen (221, 321) des Verriegelungssegments gelegen sind.

## Claims

1. Endodontic instrument (1, 2, 3, 4) extending along a longitudinal axis (10, 20, 30, 40) between a first, assembly end (120, 220, 320, 420) and a second, free end (110, 210, 310, 410), said endodontic instrument having an active portion (11, 21, 31, 41) which extends from its free end and an assembly portion (12, 22, 32, 42) which extends from its assembly end,
**characterized in that** said assembly portion (12, 22, 32, 42) has a locking segment at which three flattened portions (121, 221, 321, 421) are formed on the instrument,
each of said three flattened portions (121, 221, 321, 421) being respectively complementary, in each of the cross sections of said locking segment, to one of the sides of an equilateral triangle centered on said longitudinal axis,
at least one of said flattened portions (121, 221, 321, 421) being terminated, at the end thereof closest to said assembly end of the instrument, by a shoulder (124, 224, 324, 424) oriented substantially toward said free end (110, 210, 310, 410) of said endodontic instrument.

2. Endodontic instrument according to the preceding claim,
**characterized in that** it is formed by machining a cylindrical rod, the axis of symmetry of which constitutes said longitudinal axis (10, 20, 30, 40).

3. Endodontic instrument according to either one of the preceding claims, **characterized in that** each of said flattened portions (121, 221, 321, 421) is terminated, at the end thereof closest to the free end (110, 210, 310, 410) of the instrument, by a shoulder oriented substantially toward the assembly end (120, 220, 320, 420) of the instrument.

4. Endodontic instrument according to any one of the preceding claims, **characterized in that** each of said flattened portions (121, 221, 321, 421) forms a flat surface.

5. Endodontic instrument according to the preceding claim,
**characterized in that** the surface of each of said flattened portions (121, 221, 321, 421) is substantially parallel to said longitudinal axis (10, 20, 30, 40).

6. Endodontic instrument according to the preceding claim,
**characterized in that** each of said flattened portions (121, 221, 321, 421) is located at a distance from said longitudinal axis (10, 20, 30, 40) of between 0.25 mm and 0.35 mm, and **in that** said endodontic instrument is formed by machining a cylindrical rod, the diameter of which is between 0.8 mm and 1.2 mm.

7. Endodontic instrument according to either one of claims 5 and 6, **characterized in that** said assembly portion (22, 32) has an end segment (227, 327) between said assembly end (220, 320) and said locking segment, said end segment (227, 327) having three flattened portions respectively parallel to the three flattened portions (221, 321) of said locking segment and located at a greater distance from said longitudinal axis (20, 30) than said flattened portions (221, 321) of said locking segment.
